# EUROPEAN PATENT APPLICATION

(11) **EP 4 491 354 A1**
(43) Date of publication of application: **15.01.2025**
(21) Application number: 23766813.2
(22) Date of filing: 07.03.2023
(51) Int. Cl.: B25J 13/08

(54) **INFORMATION PROCESSING DEVICE, AND CONTROL UNIT**

(30) Priority: 08.03.2022 JP 2022035351
(71) Applicant: Kyocera Corporation, Kyoto-shi, Kyoto 612-8501 (JP)
(72) Inventor: TATSUMI, Kento, Kyoto-shi, Kyoto 612-8501 (JP); SUZUKI, Yu, Kyoto-shi, Kyoto 612-8501 (JP)
(74) Representative: TBK
(86) International application number: PCT/JP2023/008446
(87) International publication number: WO 2023/171637

(57) **Abstract**

An information processing device obtains information to control a robot to perform an operation of transferring an operation target object in a source area to a destination area. The information processing device includes a display and an inputter that receives a user input. When the display displays a first detection result of detecting at least one candidate target area including a candidate for the destination area and a second detection result of detecting at least one candidate object including a candidate for the operation target object in a work environment of the robot, the inputter receives a destination input specifying the destination area from the at least one candidate target area.

## Description

### TECHNICAL FIELD

The present disclosure relates to information processing.

### BACKGROUND OF INVENTION

Patent Literatures 1 and 2 each describe an information processing device that obtains information used for controlling a robot.

### CITATION LIST

### PATENT LITERATURE

Patent Literature 1: Japanese Unexamined Patent Application Publication No. 2008-68348
Patent Literature 2: Japanese Unexamined Patent Application Publication No. 2021-33869

### SUMMARY

One or more aspects of the present disclosure are directed to an information processing device and a controller. In one embodiment, the information processing device obtains information to control a robot to perform an operation of transferring an operation target object in a source area to a destination area. The information processing device includes a display and an inputter that receives a user input. When the display displays a first detection result of detecting at least one candidate target area including a candidate for the destination area and a second detection result of detecting at least one candidate object including a candidate for the operation target object in a work environment of the robot, the inputter receives a destination input specifying the destination area from the at least one candidate target area.

In one embodiment, the controller is connectable to the display and the inputter included in the above information processing device to communicate with the display and the inputter. The controller processes information to control a robot that transfers an operation target object in a source area to a destination area.

### BRIEF DESCRIPTION OF THE DRAWINGS

FIG. 1 is a schematic diagram of an example robot system.
FIG. 2 is a block diagram of an example information processing device.
FIG. 3 is a block diagram of a system control device.
FIG. 4 is a block diagram of an example robot controller.
FIG. 5 is a schematic diagram of the information processing device illustrating an example display.
FIG. 6 is a schematic diagram of the information processing device illustrating an example display.
FIG. 7 is a schematic diagram of the information processing device illustrating an example display.
FIG. 8 is a schematic diagram of the information processing device illustrating an example display.
FIG. 9 is a schematic diagram of the information processing device illustrating an example display.
FIG. 10 is a schematic diagram of the information processing device illustrating an example display.
FIG. 11 is a schematic diagram of the information processing device illustrating an example display.
FIG. 12 is a schematic diagram of the information processing device illustrating an example display.
FIG. 13 is a schematic diagram of the information processing device illustrating an example display.

### DESCRIPTION OF EMBODIMENTS

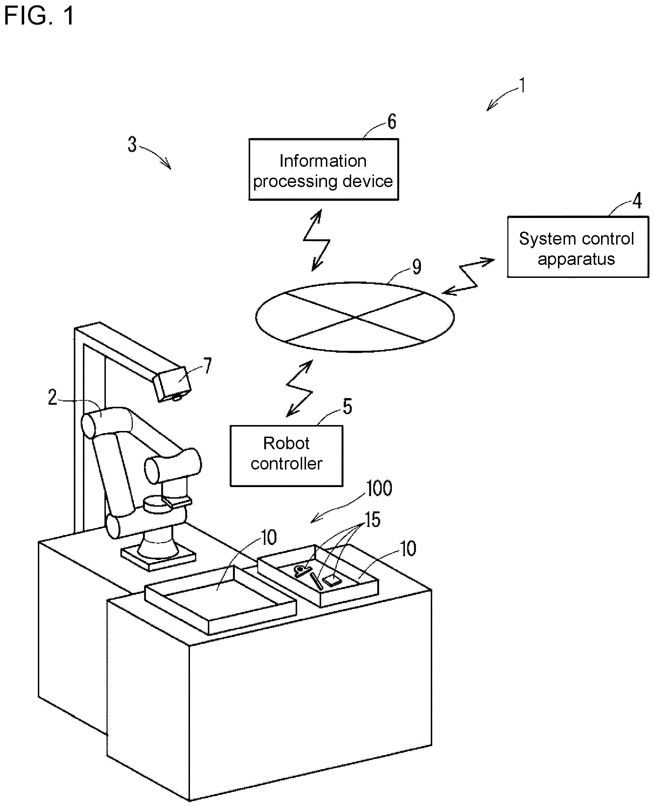

FIG. 1 is a schematic diagram of an example robot system 1. The robot system 1 includes, for example, a robot 2 and a robot control system 3 that controls the robot 2. The robot control system 3 includes, for example, a system control device 4 that manages the entire operation of the robot control system 3, a robot controller 5 that controls the robot 2, an information processing device 6 that receives a user input, and a camera 7 that captures an image of a work environment (also referred to as a work area) 100 of the robot 2.

The system control device 4, the robot controller 5, and the information processing device 6 are connected to, for example, a network 9 including, for example, the Internet. The system control device 4, the robot controller 5, and the information processing device 6 can communicate with one another through the network 9. Note that at least two of the system control device 4, the robot controller 5, and the information processing device 6 may communicate directly with each other without using the network 9.

The information processing device 6 generates task information used for controlling the robot 2 based on input information from a user and outputs the task information to the system control device 4. The task information includes job information. The job information specifies the details of an operation performed by the robot 2. The task information specifies the robot 2 that performs the operation specified by the job information included in the task information. The task information also specifies a start condition and a termination condition of the operation specified by the job information. The system control device 4 outputs the task information from the information processing device 6 to the robot controller 5. The robot controller 5 controls the robot 2 based on the task information from the system control device 4.

The robot 2 transfers, for example, an operation target object from a source area to a destination area in the work environment 100. The robot 2 holds the operation target object in the source area and transfers the held operation target object from the source area to the destination area. The operation target object may be referred to as, for example, a workpiece. The operation target object transferred from the source area to the destination area may undergo a process such as processing. The source area and the destination area may be, for example, trays. A tray as the source area (also referred to as a source tray) receives multiple operation target objects. For example, the robot 2 holds the operation target objects in the source tray one by one and transfers each of the operation target objects to a tray as the destination area (also referred to as a destination tray). The robot controller 5 controls the robot 2 to transfer the operation target objects from the source tray to the destination tray.

The user inputs information to be used (simply referred to as information) for generating the task information into, for example, the information processing device 6. A stage in which the user inputs the information into the information processing device 6 is hereafter referred to as an input stage. The information processing device 6 generates the task information based on the information input by the user at the input stage.

At the input stage, the user performs, on the information processing device 6, a source input that specifies the source area, a destination input that specifies the destination area, and a target object input that specifies the operation target object. The source input may be, for example, an input that specifies the source tray, and the destination input may be, for example, an input that specifies the destination tray. An operation target input may be, for example, an input that specifies the operation target object. The user performs the source input, the destination input, and the target object input on the information processing device 6 to specify a transfer target as well as the route and the destination of the transfer target. Note that one form of the target object input is a target object category input that specifies a category of the operation target object (also referred to as an operation target object category) in the present embodiment.

At the input stage, the user performs, on the information processing device 6, a holding method input that specifies a method for holding the operation target object and a placement method input that specifies a method for placing the operation target object in the destination area. The information processing device 6 generates action information that defines the operation of the robot 2 based on the source input, the destination input, the target object category input, the holding method input, and the placement method input received from the user. A controller 60 generates job information including at least one piece of the action information.

At the input stage, the user performs, on the information processing device 6, a robot input that specifies the robot 2 to perform an operation and a condition input that specifies the start condition and the termination condition of the operation. The information processing device 6 generates the task information based on the job information and on the robot input and the condition input received from the user.

FIG. 1 illustrates the work environment 100 (also referred to as an input stage work environment 100) at the input stage. The input stage work environment 100 includes multiple candidate target areas 10 each being a candidate for the source area and the destination area. An example of the candidate target areas 10 is a tray. The candidate target areas 10 may be hereafter referred to as candidate trays 10. In the input stage work environment 100, the multiple candidate target areas include multiple objects 15 each of which may be a candidate for the operation target object (also referred to as a candidate object). As described later, a candidate object is determined from the multiple objects 15.

In the example in FIG. 1, the input stage work environment 100 includes two candidate target areas 10 (in other words, two candidate trays 10). One of the two candidate target areas 10 alone includes the multiple objects 15. Note that each of the candidate target areas 10 may include at least one object 15. The input stage work environment 100 may include three or more candidate target areas 10 (in other words, three or more candidate trays 10).

As described later, the robot control system 3 detects the multiple candidate target areas 10 in the input stage work environment 100. The information processing device 6 receives, from the user, the source input that specifies the source area from the detected candidate target areas 10 and the destination input that specifies the destination area from the detected candidate target areas 10. The robot control system 3 detects multiple candidate objects from the multiple objects 15 in the input stage work environment 100. The information processing device 6 receives, from the user, a target object category input that specifies the category of the operation target object among the detected candidate objects.

Note that the robot control system 3 may include multiple system control devices 4. The robot control system 3 may include multiple robot controllers 5. The robot control system 3 may include multiple information processing devices 6. The robot system 1 may include multiple robots 2. In this case, each of the robots 2 may be controlled by at least one robot controller 5.

### Structure of Information Processing Device

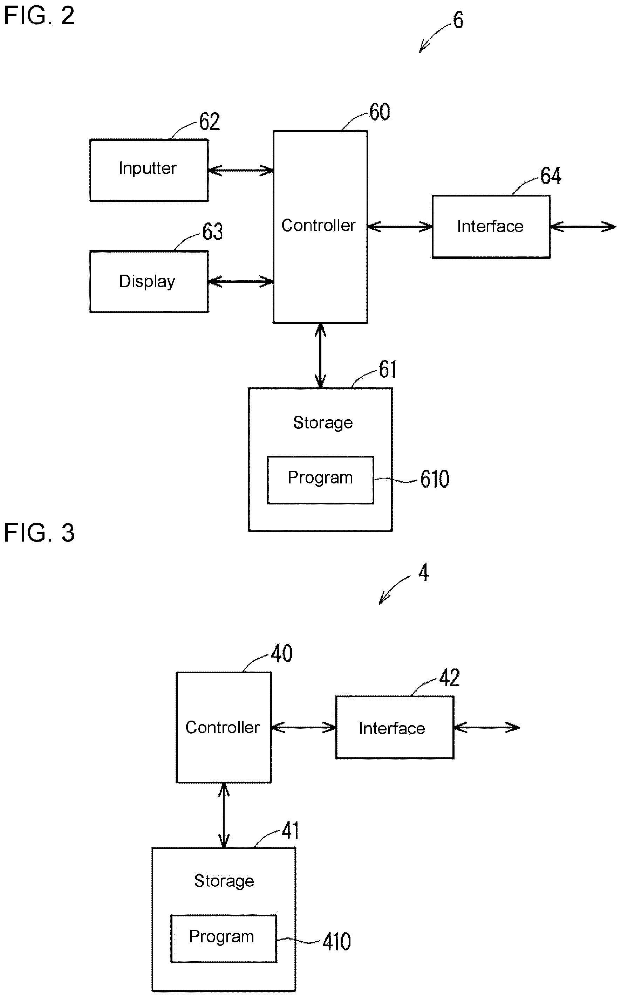

FIG. 2 is a block diagram of the information processing device 6 illustrating its example configuration. As illustrated in FIG. 2, the information processing device 6 includes, for example, the controller 60, a storage 61, an inputter 62, a display 63, and an interface 64. The information processing device 6 may be, for example, an information processing circuit. The information processing device 6 is, for example, one type of computer. The information processing device 6 that receives a user input may be, for example, a user terminal device or a terminal device. The information processing device 6 may be, for example, a desktop or a laptop personal computer, a tablet terminal, a mobile phone such as a smartphone, or any other device.

The interface 64 can communicate with the network 9 based on, for example, a communication standard such as Wi-Fi. The interface 64 may be, for example, an interface circuit. The interface 64 may be, for example, a communication unit or a communication circuit. The interface 64 may be wired or wirelessly connected to the network 9. The interface 64 inputs, into the controller 60, information received from the network 9. The interface 64 outputs, to the network 9, information from the controller 60.

The controller 60 can control other components of the information processing device 6 to centrally manage the operation of the information processing device 6. The controller 60 may be, for example, a control circuit. As described in more detail below, the controller 60 includes at least one processor to provide control and processing capabilities for implementing various functions.

In various embodiments, the at least one processor may be implemented as a single integrated circuit (IC), or at least one of multiple ICs connected to one another for mutual communication or discrete circuits. The at least one processor may be implemented using various known techniques.

In one embodiment, for example, the processor includes one or more circuits or units configured to implement instructions stored in an associated memory to perform one or more data computation procedures or processes. In another embodiment, the processor may be firmware (e.g., a discrete logic component) configured to perform one or more data computation procedures or processes.

In various embodiments, the processor includes one or more processors, controllers, microprocessors, microcontrollers, application-specific integrated circuits (ASICs), digital signal processors, programmable logic devices, field programmable gate arrays, combinations of any of these devices or configurations, or combinations of other known devices and configurations. The processor may implement the functions described below.

The controller 60 may include, for example, a central processing unit (CPU) as a processor. The storage 61 may include a non-transitory recording medium readable by the CPU in the controller 60, such as a read-only memory (ROM) or a random-access memory (RAM). The storage 61 stores, for example, multiple different programs 610 for controlling the information processing device 6. Various functions of the controller 60 are implemented by, for example, the CPU in the controller 60 executing the program 610 in the storage 61. The multiple different programs 610 include a graphical user interface (GUI) program 610 or other programs.

Note that the configuration of the controller 60 is not limited to the above example. For example, the controller 60 may include multiple CPUs. The controller 60 may also include at least one digital signal processor (DSP). The functions of the controller 60 may be implemented entirely or partially using hardware circuits without using software to implement the functions. The storage 61 may also include a non-transitory computer-readable recording medium other than a ROM and a RAM. The storage 61 may include, for example, a small hard disk drive and a solid-state drive (SSD).

The inputter 62 can receive various types of input, such as the source input and the destination input, from the user. The inputter 62 may include, for example, a mouse and a keyboard. The inputter 62 may include a touch sensor to receive touch operations performed by the user. The inputter 62 may include a microphone to receive a voice input from the user. The controller 60 obtains the details of the user input received by the inputter 62 based on an output signal from the inputter 62.

The display 63 can display various items of information under control by the controller 60. The display 63 includes a display surface on which various items of information are displayed. The display 63 may be, for example, a liquid crystal display, an organic electroluminescent (EL) display, or a plasma display panel. When the inputter 62 includes the touch sensor, the touch sensor and the display 63 may together serve as a touchscreen display that performs display and detects touches. The touchscreen display can detect touch operations on a display surface of the display 63. The inputter 62 and the display 63 together serve as a user interface. The display surface hereafter indicates the display surface of the display 63.

### Example Structure of System Control Device

FIG. 3 is a block diagram of the system control device 4 illustrating its example configuration. As illustrated in FIG. 3, the system control device 4 includes, for example, a controller 40, a storage 41, and an interface 42. The system control device 4 may be, for example, a system control circuit. The system control device 4 is, for example, a computer device. The system control device 4 may be, for example, a cloud server that provides cloud services.

The interface 42 can communicate with the network 9 based on a communication standard such as Wi-Fi. The interface 42 may be, for example, an interface circuit. The interface 42 may be, for example, a communication unit or a communication circuit. The interface 42 may be wired or wirelessly connected to the network 9.

The controller 40 can control other components of the system control device 4 to centrally manage the operation of the system control device 4. The controller 40 may be, for example, a control circuit. As described in more detail below, the controller 40 includes at least one processor to provide control and the processing capabilities for implementing various functions. The processor included in the controller 40 may also have the structure of the processor included in the controller 60 in the information processing device 6 described above.

The controller 40 may include, for example, a CPU as a processor. The storage 41 may include a non-transitory recording medium readable by the CPU in the controller 40, such as a ROM or a RAM. The storage 41 stores, for example, multiple different programs 410 for controlling the system control device 4. Various functions of the controller 40 are implemented by, for example, the CPU in the controller 40 executing the program 410 in the storage 41.

Note that the configuration of the controller 40 is not limited to the above example. For example, the controller 40 may include multiple CPUs. The controller 40 may also include at least one DSP. The entire functions of the controller 40 or part of the functions of the controller 60 may be implemented using hardware circuits, without using software to implement the functions. The storage 41 may also include a non-transitory computer-readable recording medium other than a ROM and a RAM, in the same manner as or in a similar manner to the storage 61. Note that the robot control system 3 may include multiple system control devices 4 included in a cloud server.

### Example Structure of Robot Controller

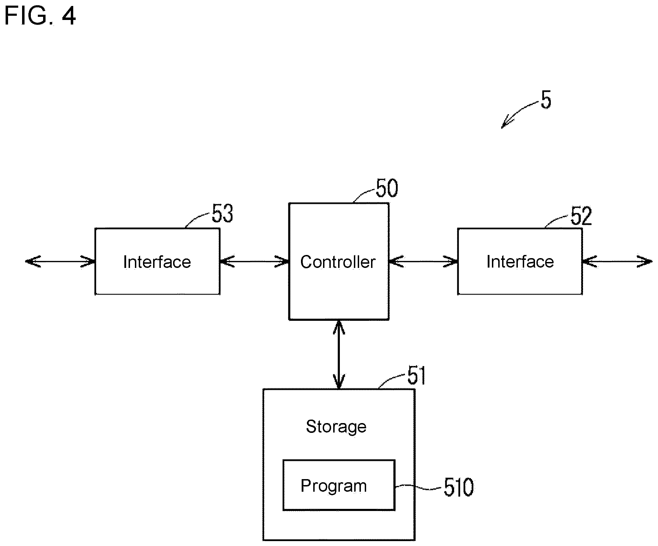

FIG. 4 is a block diagram of the robot controller 5 illustrating its example configuration. As illustrated in FIG. 4, the robot controller 5 includes, for example, a controller 50, a storage 51, and interfaces 52 and 53. The robot controller 5 may be, for example, a robot controller circuit. The robot controller 5 is, for example, a computer device.

The interface 52 can communicate with the network 9 based on a communication standard such as Wi-Fi. The interface 52 may be, for example, an interface circuit. The interface 52 may be, for example, a communication unit or a communication circuit. The interface 52 may be wired or wirelessly connected to the network 9.

The interface 53 can exchange signals with the robot 2 and with the camera 7. The controller 50 can control the robot 2 through the interface 53. The camera 7 captures an image of the work environment 100 and generates a work environment image of the work environment 100. The work environment image generated with the camera 7 is input into the controller 50 through the interface 53. The camera 7 may be a color camera or a grayscale camera. The interface 53 may be, for example, an interface circuit.

The controller 50 can control other components of the robot controller 5 (also simply referred to as the controller 5) to centrally manage the operation of the robot controller 5. The controller 50 may be, for example, a control circuit. As described in more detail below, the controller 50 includes at least one processor to provide control and processing capabilities for implementing various functions. The processor included in the controller 50 may also have the structure of the processor included in the controller 60 in the information processing device 6 described above.

The controller 50 may include, for example, a CPU as a processor. The storage 51 may include a non-transitory recording medium readable by the CPU in the controller 50, such as a ROM or a RAM. The storage 51 stores, for example, multiple different programs 510 for controlling the controller 5. Various functions of the controller 50 are implemented by, for example, the CPU in the controller 50 executing the program 510 in the storage 51.

Note that the configuration of the controller 50 is not limited to the above example. For example, the controller 50 may include multiple CPUs. The controller 50 may also include at least one DSP. The entire functions of the controller 50 or part of the functions of the controller 60 may be implemented using hardware circuits, without using software to implement the functions. The storage 51 may also include a non-transitory computer-readable recording medium other than a ROM and a RAM, in the same manner as or in a similar manner to the storage 61.

### Operation Examples of Robot Control System

Operation examples of the robot control system 3 will be described below, focusing on the operation of the information processing device 6. The input stage work environment 100 is hereafter simply referred to as the work environment 100.

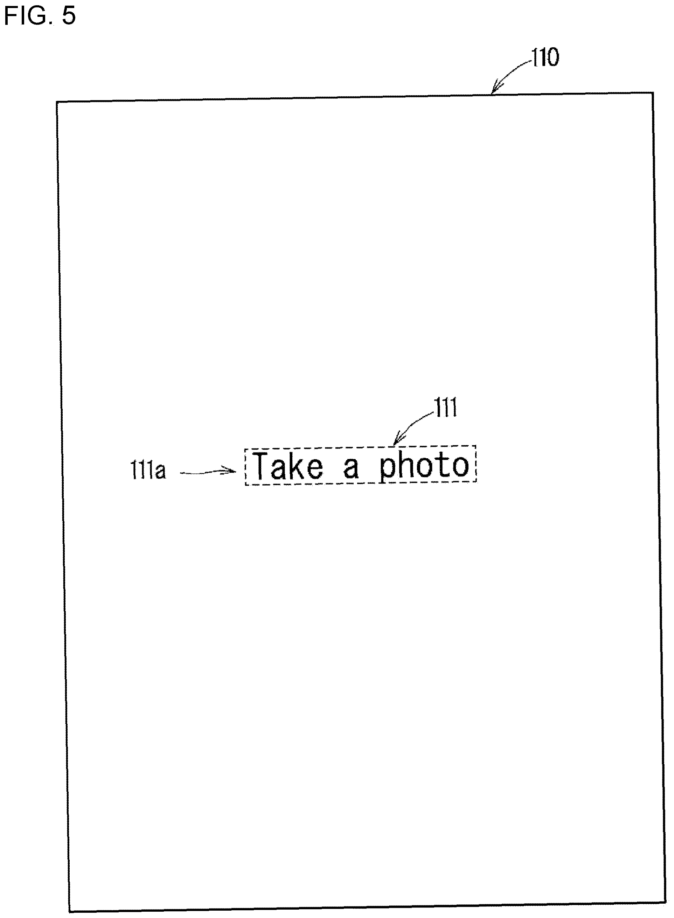

The storage 61 in the information processing device 6 stores the GUI program 610 for generating the action information based on the user input such as the source input and the destination input. When the controller 60 starts execution of the GUI program 610, the display 63 displays, for example, a screen 110 illustrated in FIG. 5 as an initial screen.

The screen 110 includes, for example, an instruction area 111. The instruction area is used when the user provides an instruction to the information processing device 6. When the user performs, on the inputter 62, an input selecting the instruction area, an instruction corresponding to the instruction area is provided to the inputter 62. The selection input may be a touch operation on the instruction area or a predetermined operation on a mouse with a pointer located on the instruction area.

The instruction area 111 is used to, for example, instruct the camera 7 to capture an image. The instruction area 111 includes information 111a indicating that the instruction area 111 is used for instructing the camera 7 to capture an image. For example, a character string "Take a photo" is used as the information 111a. The information 111a is, for example, emphasized. The information 111a is highlighted in, for example, a color (e.g., blue) that is more noticeable than its surroundings. In the drawings in the present disclosure, emphasized portions are surrounded by broken lines for ease of explanation.

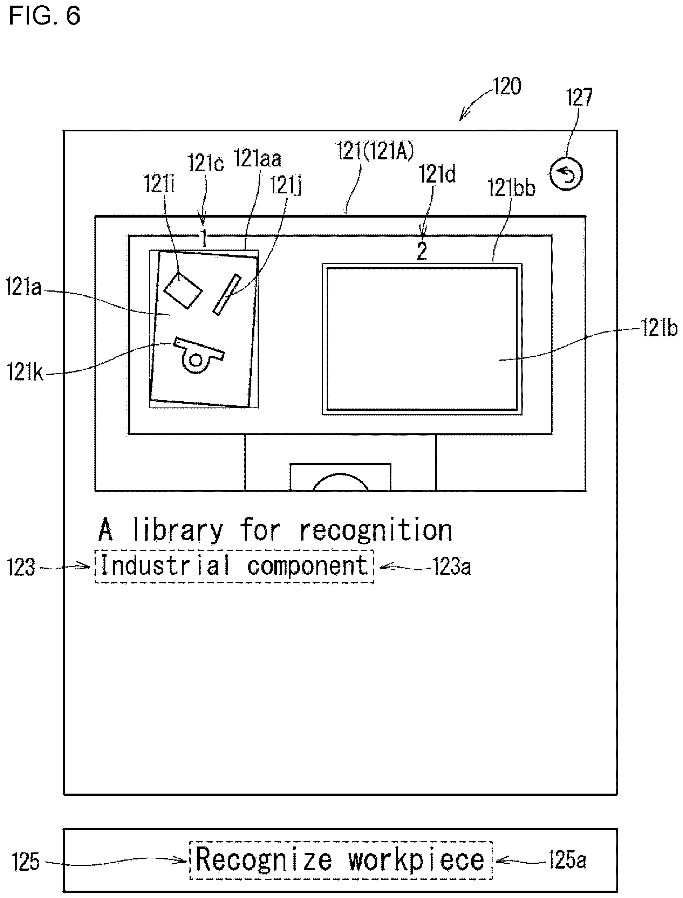

When the inputter 62 receives an input selecting the instruction area 111, the display 63 displays, as illustrated in FIG. 6, a screen 120 including a work environment image 121 of the work environment 100.

In the information processing device 6, when the inputter 62 receives an input selecting the instruction area 111, the controller 60 transmits, to the system control device 4 through the interface 64, capturing instruction information that instructs the camera 7 to capture an image. The system control device 4 transmits the received capturing instruction information to the controller 5. The controller 5 receiving the capturing instruction information controls the camera 7 and causes the camera 7 to capture an image of the work environment 100. The camera 7 outputs the work environment image 121 of the work environment 100 (more specifically, the input stage work environment 100) to the controller 5. The work environment image 121 is, for example, a still image. Note that the work environment image 121 may be a video.

In the controller 5, the controller 50 detects, based on the work environment image 121, multiple candidate target areas 10 each being a candidate for the source area and the destination area in the work environment 100. The storage 51 stores a candidate target area detection program 510 for detecting the candidate target areas 10. The controller 50 executes the candidate target area detection program 510 to identify a candidate target area image of the candidate target areas 10 in the work environment image 121. Once the candidate target area image is identified, the position and the boundary of each of the candidate target areas 10 on the work environment 100 are identified. Thus, when the candidate target area image is identified in the work environment image 121, the candidate target areas 10 are detected in the work environment 100.

The candidate target area detection program 510 may perform inference using artificial intelligence (AI), such as deep learning, or may perform template matching. In the example in FIG. 1, the work environment 100 includes two candidate target areas 10. In this case, the controller 50 identifies two candidate target area images 121a and 121b of the respective two candidate target areas 10 in the work environment image 121 to detect the two candidate target areas 10. Note that, for the work environment 100 including three or more candidate target areas 10 (e.g., three or more candidate trays 10 when the candidate target area detection program 510 detects the trays), three or more candidate target area images are identified.

The controller 50 transmits, to the system control device 4 through the interface 52, the work environment image 121 and candidate target area detection result information that indicates the result (also referred to as a candidate target area detection result) of detecting the multiple candidate target areas 10. The system control device 4 transmits the received candidate target area detection result information and the work environment image 121 to the information processing device 6. In the information processing device 6, the controller 60 causes the display 63 to display the screen 120 including the work environment image 121 as illustrated in FIG. 6.

The candidate target area detection result information includes, for example, candidate target area image identification information for identifying the position and the boundary of each of the candidate target area images on the work environment image 121. The candidate target area detection result information also includes the name of each of the candidate target areas being detected. The two candidate target areas 10 illustrated in FIG. 1 are named "TRAY 1" and "TRAY 2".

The controller 60 in the information processing device 6 causes the candidate target area detection result to appear on the work environment image 121 based on the candidate target area detection result information. The controller 60 causes, for example, frame lines (also referred to as bounding boxes) surrounding the candidate target area images and name identification information for identifying the names of the candidate target areas to appear on the work environment image 121 as the candidate target area detection result. The name identification information for identifying the name of each of the candidate target areas appears, for example, near the candidate target area image of the candidate target area. The controller 60 identifies the position and the boundary of the candidate target area image 121a based on the candidate target area detection result information. The controller 60 causes a frame line 121aa surrounding the candidate target area image 121a to appear on the work environment image 121. The controller 60 identifies the position and the boundary of the candidate target area image 121b based on the candidate target area detection result information and causes a frame line 121bb surrounding the candidate target area image 121b to appear on the work environment image 121. The frame lines 121aa and 121bb have, for example, the same color (e.g., orange). The controller 60 causes the character "1" as name identification information 121c to appear near the candidate target area image 121a of the candidate target area 10 as "TRAY 1". The controller 60 causes the character "2" as name identification information 121d to appear near the candidate target area image 121b of the candidate target area 10 as "TRAY 2". The name identification information 121c and 121d have, for example, the same color (e.g., orange). Note that the frame lines 121aa and 121bb may be emphasized in a color different from, for example, the color of the name identification information 121c and 121d. In this case, the color may be changed based on the presence of candidate objects described later.

The controller 60 causes, as illustrated in FIG. 6, the display 63 to display the screen 120 including the work environment image 121 (also referred to as a work environment image 121A) including the candidate target area detection result. The display 63 displays the frame lines 121aa and 121bb and the name identification information 121c and 121d to display the candidate target area detection result. Note that the candidate target area detection result may be displayed in different manners.

In this manner, with the work environment image 121Aincluding the candidate target area detection result, the user viewing the work environment image 121A can easily recognize the detected multiple candidate target areas.

The capturing instruction information output from the information processing device 6 is input into the controller 5 through the system control device 4 in the above example, but may be directly input into the controller 5. The work environment image 121 may be input into the information processing device 6 directly from the controller 5.

The display 63 may display the screen 120 as the initial screen instead of the screen 110. In this case, the user may not perform, on the inputter 62, an input instructing capturing of an image of the work environment 100 (e.g., an input selecting the instruction area 111).

Although the controller 5 performs a candidate target area detection process of detecting the multiple candidate target areas 10 based on the work environment image 121 in the above example, the system control device 4 or the information processing device 6 may perform the candidate target area detection process.

When the system control device 4 performs the candidate target area detection process, the system control device 4 receives the work environment image 121 generated with the camera 7 through the controller 5. The controller 40 reads the candidate target area detection program 410 for detecting the candidate target areas 10 from the storage 41 and executes the program to detect the multiple candidate target areas 10. The controller 40 transmits the candidate target area detection result information and the work environment image 121 to the information processing device 6 through the interface 42. Note that the camera 7 may be directly connected to and communicate with the system control device 4 in this case.

When the information processing device 6 performs the candidate target area detection process, the information processing device 6 receives the work environment image 121 from the controller 5 or the system control device 4. The controller 60 then reads the candidate target area detection program 610 for detecting the candidate target areas from the storage 61 and executes the program to detect the multiple candidate target areas 10. The controller 60 then generates, as described above, the work environment image 121A including the candidate target area detection result. Note that the camera 7 may be directly connected to and communicate with the information processing device 6 in this case.

The work environment image 121Aincludes multiple object images 121i, 121j, and 121k of the respective objects 15. In the example in FIG. 1, the candidate target area 10 as "TRAY 1" includes the multiple objects 15. Thus, the object images 121i, 121j, and 121k are located on the candidate target area image 121a of the candidate target area 10 as "TRAY 1". Note that, when the candidate target area 10 as "TRAY 2" includes the object 15, an object image of the object 15 is located on the candidate target area image 121b of the candidate target area 10 as "TRAY 2".

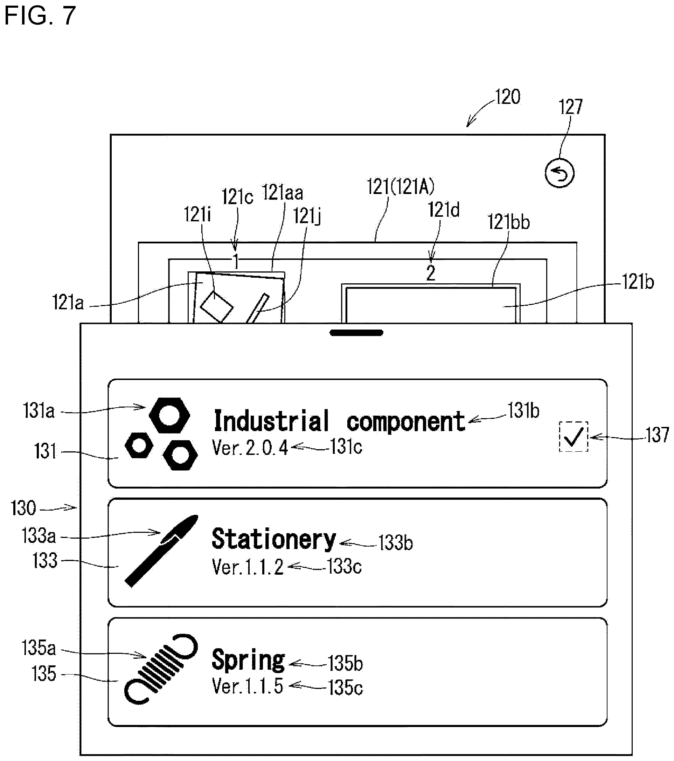

The screen 120 includes, for example, multiple instruction areas 123, 125, and 127 in addition to the work environment image 120A. The storage 41 in the system control device 4 stores multiple different candidate object detection programs. The candidate object detection programs are used to perform a candidate object detection process of detecting candidate objects from the work environment 100. Each of the multiple different candidate object detection programs detects different candidate objects. The instruction area 123 is an area for instructing display of a use program specifying screen 130 for specifying a candidate object detection program to be used (also referred to as a use candidate object detection program) from the multiple different candidate object detection programs. The instruction area 123 is displayed, for example, below the work environment image 121A. When the inputter 62 receives an input selecting the instruction area 123, the controller 60 causes the display 63 to display the use program specifying screen 130. In this case, the use program specifying screen 130 is, for example, superimposed on the screen 120 as illustrated in FIG. 7.

In the instruction area 123, identification information 123a identifies the use candidate object detection program currently used. The identification information 123a is, for example, the name of candidate objects detected after execution of the use candidate object detection program. In the example in FIG. 6, a character string "Industrial component" appears as the identification information 123a. Thus, the candidate object detection program that detects industrial components as the candidate objects is specified as the use candidate object detection program. The details of the identification information 123a changes as the use candidate object detection program changes. The identification information 123a is emphasized by, for example, being highlighted in a noticeable color (e.g., blue).

The instruction area 127 is an area for instructing initialization of the operation based on the GUI program 610 in the information processing device 6. The instruction area 127 may be a reset button. The instruction area 127 is displayed, for example, in the upper right to the work environment image 121A. The instruction area 127 is unselectable in the screen 120. The instruction area 127 will be described in detail later. The unselectable instruction area 127 may be hereafter referred to as an inactive instruction area 127, and the selectable instruction area 127 may be referred to as an active instruction area 127.

The instruction area 125 is an area for instructing execution of the candidate object detection process. The instruction area 125 is displayed, for example, below the instruction area 123. In the instruction area 125, information 125a indicates that the instruction area 125 is an area for instructing execution of the candidate object detection process. For example, a character string "Recognize workpiece" is used as the information 125a. The information 125a is emphasized by, for example, being highlighted in a noticeable color (e.g., blue). When the inputter 62 receives an input selecting the instruction area 125, the use candidate object detection program is executed. The operation of the robot control system 3 during the execution of the use candidate object detection program will be described in detail later.

As illustrated in FIG. 7, the use program specifying screen 130 includes instruction areas 131, 133, and 135. The instruction area 131 is an area for specifying, as the use candidate object detection program, the candidate object detection program that detects industrial components as the candidate objects (hereafter also referred to as an industrial component detection program). An input selecting the instruction area 131 is a program input that specifies the industrial component detection program as the use candidate object detection program. The instruction area 131 includes a schematic diagram 131a of the appearance of a typical industrial component, a character string "Industrial component" as a string 131b, and version information 131c of the industrial component detection program. When the use candidate object detection program currently used is the industrial component detection program, a shape 137 appears in the instruction area 131 as illustrated in FIG. 7. The shape 137 is emphasized by, for example, being highlighted in a noticeable color (e.g., blue). The user viewing the shape 137 can easily recognize that the candidate object detection program currently used is the industrial component detection program.

The instruction area 133 is an area for specifying, as the use candidate object detection program, the candidate object detection program that detects stationery items as the candidate objects (hereafter also referred to as a stationery detection program). The instruction area 133 includes a schematic diagram 133a of the appearance of a typical stationery item, a character string "Stationery" as a string 133b, and version information 133c of the stationery detection program. When the use candidate object detection program currently used is the stationery detection program, the shape 137 appears in the instruction area 133.

The instruction area 135 is an area for specifying, as the use candidate object detection program, the candidate object detection program that detects springs as the candidate objects (hereafter also referred to as a spring detection program). The instruction area 135 includes a schematic diagram 135a of the appearance of a spring, a character string "Spring" as a string 135b, and version information 135c of the spring detection program. When the use candidate object detection program currently used is the spring detection program, the shape 137 appears in the instruction area 135.

When the inputter 62 receives an input selecting the instruction area 131, or in other words, when the inputter 62 receives a program input specifying the industrial component detection program as the use candidate object detection program, the controller 60 determines the industrial component detection program as the use candidate object detection program. The controller 60 causes the display 63 to stop displaying the use program specifying screen 130. The display 63 then displays the screen in FIG. 6 again.

When the inputter 62 receives an input selecting the instruction area 133, the controller 60 determines the stationery detection program as the use candidate object detection program. The controller 60 causes the display 63 to stop displaying the use program specifying screen 130. The display 63 then displays the screen in FIG. 6 again, with "Stationery" as the identification information 123a appearing in the instruction area 123 of the screen 120.

When the inputter 62 receives an operation on the instruction area 135, the controller 60 determines the spring detection program as the use candidate object detection program. The controller 60 causes the display 63 to stop displaying the use program specifying screen 130. The display 63 then displays the screen in FIG. 6 again, with "Spring" as the identification information 123a appearing in the instruction area 123 of the screen 120.

When the inputter 62 receives an input selecting the instruction area 125 included in the screen 120, the controller 60 transmits, to the system control device 4 through the interface 64, the work environment image 121A and an identifier (also referred to as identifier information) for the use candidate object detection program.

In the system control device 4, the storage 41 stores, for example, an industrial component detection program 410, a stationery detection program 410, and a spring detection program 410 as the candidate object detection programs 410. The controller 40 reads, from the storage 41, the candidate object detection program 410 identified by the identifier provided to the system control device 4, or in other words, a use candidate object detection program 410. The controller 40 executes the read use candidate object detection program 410 and detects the multiple candidate objects from the work environment 100 based on the work environment image 121A. In this manner, the multiple candidate objects are determined from the multiple objects 15 in the work environment 100. When the use candidate object detection program is the industrial component detection program, industrial components are detected as the candidate objects from the work environment 100. When the use candidate object detection program is the stationery detection program, stationery items are detected as the candidate objects from the work environment 100. When the use candidate object detection program is the spring detection program, springs are detected as the candidate objects from the work environment 100.

The controller 40 executes the use candidate object detection program 410 and identifies, in the work environment image 121A, candidate object images of the candidate objects. When the candidate object images are identified, the position and the boundary of each of the candidate objects are identified in the work environment 100. Identifying the candidate object images in the work environment image 121A thus allows detection of the candidate objects in the work environment 100.

The candidate object detection program may perform inference using AI, such as deep learning, or may perform template matching. In the example in FIG. 1, the multiple objects 15 in the work environment 100 includes two industrial components and one stationery item (an eraser in this example). In the example in FIG. 6, the use candidate object detection program is the industrial component detection program. In response to selection of the instruction area 125 in FIG. 6, the controller 40 identifies, as the candidate object images, two object images 121j and 121k of the respective two industrial components that are the candidate objects in the work environment image 121A and detects the two candidate objects. Note that when the multiple objects 15 include three or more candidate objects, three or more candidate object images are identified. However, the stationery item is not an industrial component in the work environment image 121A. Thus, the object image 121i of the stationery item is not identified as the candidate object image. The object images 121j and 121k may be hereafter referred to as the candidate object images 121j and 121k, respectively.

The controller 40 transmits, to the information processing device 6 through the interface 42, candidate object detection result information indicating the result of detecting the multiple candidate objects (also referred to as a candidate object detection result). The candidate object detection result information includes, for example, candidate object image identification information for identifying the position and the boundary of each of the candidate object images on the work environment image 121. The candidate object detection result information also includes information about each of the detected candidate objects (hereafter also referred to as candidate object information). The candidate object information includes, for example, the name of each of the candidate objects, the model number of each of the candidate objects, the certainty factor for the detection result of each of the candidate objects, and the category (also referred to as a class) of each of the candidate objects. The category of each of the candidate objects may be the same as or different from the model number. In the example in FIG. 1, the two industrial components included in the multiple objects 15 include, for example, a shaft and a pillow block bearing. The object image 121j is an image of the shaft, and the object image 121k is an image of the pillow block bearing. The candidate object information about the detected shaft includes the model number of the shaft, the certainty factor for the detection result of the shaft, and the category assigned to the shaft. The candidate object information about the detected pillow block bearing includes the model number of the pillow block bearing, the certainty factor for the detection result of the pillow block bearing, and the category assigned to the pillow block bearing.

When the information processing device 6 receives the candidate object detection result information, the controller 60 causes the candidate object detection result to appear on the work environment image 121A based on the candidate object detection result information. The controller 60 causes, for example, mask images masking the candidate object images and model numbers of the candidate objects to appear as the candidate object detection result on the work environment image 121A. The mask images may be, for example, translucent images. The model numbers of the candidate objects appear, for example, near the corresponding candidate object images of the candidate objects. For example, the controller 60 identifies the position and the boundary of the candidate object image 121j based on the candidate object detection result information and adds a mask image 121jj that masks the candidate object image 121j to the work environment image 121A. The mask image 121jj may have, for example, a single color (e.g., red). The controller 60 also identifies the position and the boundary of the candidate object image 121k based on the candidate object detection result information and adds a mask image 121kk that masks the candidate object image 121k to the work environment image 121A. The mask image 121kk may have, for example, a single color (e.g., red). The controller 60 causes a model number 121m of the candidate object in the candidate object image 121j to appear near the candidate object image 121j in the work environment image 121A. The controller 60 causes a model number 121n of the candidate object in the candidate object image 121k to appear near the candidate object image 121k in the work environment image 121A. The model numbers 121m and 121n are included in the candidate object detection result information.

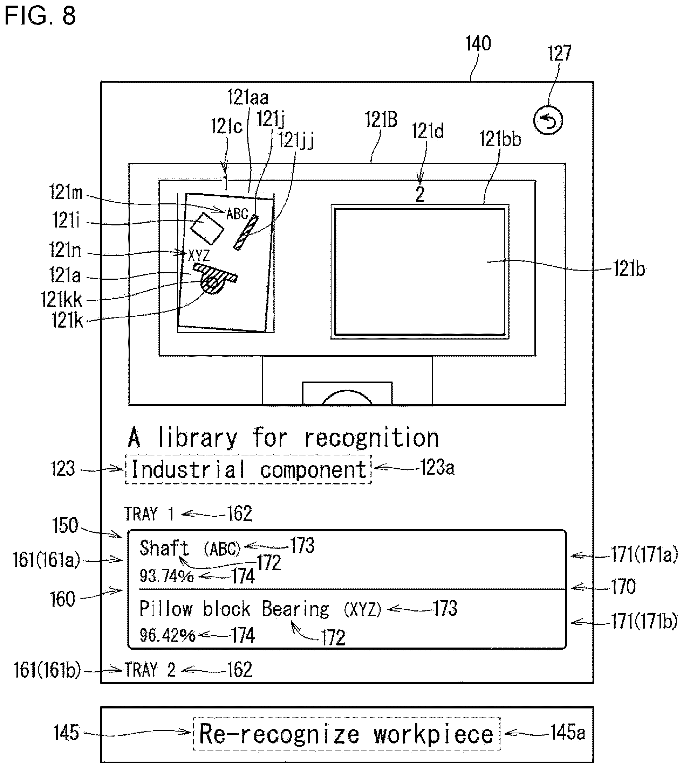

The controller 60 generates a screen 140 including the work environment image 121A including the candidate object detection result (also referred to as a work environment image 121B) based on the candidate target area result information and the candidate object detection result information. As illustrated in FIG. 8, the controller 60 causes the display 63 to display the generated screen 140.

In this manner, with the work environment image 121B including the candidate object detection result, the user viewing the work environment image 121B can easily recognize the detected multiple candidate objects.

The screen 140 includes the instruction areas 123 and 127 described above and an instruction area 145. The screen 140 includes the inactive instruction area 127. When the inputter 62 receives an input selecting the instruction area 123 included in the screen 140, the display 63 superimposes the use program specifying screen 130 on the screen 140. The user can then respecify the use candidate object detection program. The instruction area 145 is an area for instructing repetition of the candidate object detection process. In the instruction area 145, information 145a indicates that the instruction area 145 is an area for instructing repetition of the candidate object detection process. For example, a character string "Re-recognize workpiece" is used as the information 145a. The information 145a is highlighted by, for example, being displayed in a noticeable color (e.g., blue). When the inputter 62 receives an input selecting the instruction area 145, the use candidate object detection program is re-executed in a manner as described above. In response to re-execution of the use candidate object detection program, the display 63 displays the screen 140 including the work environment image 121B with the candidate object detection result obtained through the re-execution of the use candidate object detection program.

On the screen 140, list information 150 listing the detected multiple candidate target areas and the detected multiple candidate objects appears as the candidate target area detection result and the candidate object detection result. The display 63 can display the list information 150 in a scrollable manner in response to the user input on the inputter 62. The list information 150 is displayed, for example, below the instruction area 123. The instruction area 145 is displayed, for example, below the list information 150.

The list information 150 includes candidate target area list information 160 listing the detected multiple candidate target areas. The candidate target area list information 160 includes information 161 about each of the detected candidate target areas (also referred to as candidate target area information 161). In the example in FIG. 8, the candidate target area list information 160 includes candidate target area information 161a about detected "TRAY 1" and candidate target area information 161b about detected "TRAY 2". The candidate target area information 161 includes the names 162 of the candidate target areas. The candidate target area information 161 includes candidate object list information 170 listing the detected multiple candidate objects located in the candidate target areas. In the example in FIG. 8, the candidate target area 10 as "TRAY 1" alone includes the detected multiple candidate objects (e.g., the shaft and the pillow block bearing). Thus, the candidate target area information 161a about "TRAY 1" includes the candidate object list information 170. The candidate target area information 161b about "TRAY 2", however, includes no candidate object list information 170. When "TRAY 2" also includes the multiple candidate objects, the candidate target area information 161b about "TRAY 2" also includes the candidate object list information 170.

The candidate object list information 170 includes sets of candidate object information 171 about the respective candidate objects. In the example in FIG. 8, the candidate object list information 170 includes candidate object information 171a about the detected shaft and candidate object information 171b about the detected pillow block bearing. The candidate object information 171 includes a name 172 of the candidate object, a model number 173 of the candidate object, and a certainty factor 174 for the detection result of the candidate object.

In this manner, although the detected candidate target areas and the candidate objects may be less recognizable in the work environment image 121B, displaying the list information 150 allows the user to recognize the detected candidate target areas and the detected candidate objects with the list information 150. For example, when the frame lines 121aa and 121bb are less visible and the detected candidate target areas are less recognizable in the work environment image 121B, the detected candidate target areas can be recognized with the list information 150. For example, when the mask images 121jj and 121kk are less visible and the detected candidate objects are less recognizable in the work environment image 121B, the detected candidate objects can be recognized with the list information 150.

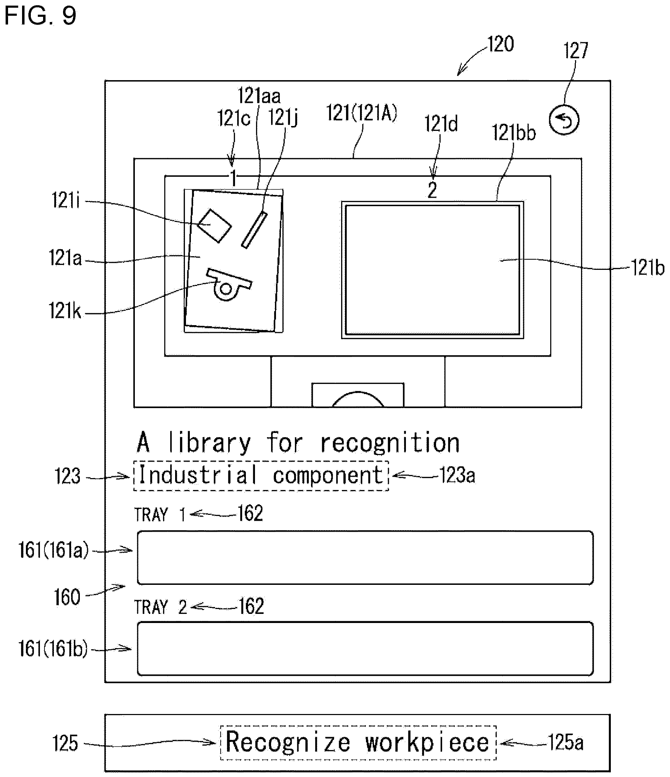

Note that, as illustrated in FIG. 9, the candidate target area list information 160 may appear on the screen 120 described above. No candidate object is detected when the screen 120 is displayed. Thus, the candidate target area list information 160 included in the screen 120 includes no candidate object list information 170. In this manner, when the candidate target area list information 160 is displayed, the detected candidate target areas can be recognized with the candidate target area list information 160 although the detected candidate target areas are less recognizable in the work environment image 121A.

Although the system control device 4 performs the candidate object detection process in the above example, the controller 5 or the information processing device 6 may perform the candidate object detection process. When the controller 5 performs the candidate object detection process, the controller 5 receives the work environment image 121A and an identifier for the use candidate object detection program from the information processing device 6 through the system control device 4. The controller 50 reads the candidate target area detection program 510 corresponding to the identifier received from the storage 51 and executes the program. The controller 50 then transmits the candidate object detection result information to the system control device 4 through the interface 52. The system control device 4 transmits the received candidate object detection result information to the information processing device 6.

When the information processing device 6 performs the candidate object detection process, the controller 60 reads a use candidate object detection program 610 from the storage 61 and executes the program in the information processing device 6. The controller 60 then generates the work environment image 121B based on the candidate object detection result information.

The screen 120 may include no instruction area 125. In this case, in response to selection of the instruction area 111 on the screen 110, for example, a default use candidate object detection program may be executed to display the screen 140, with no display of the screen 120. Alternatively, upon execution of the GUI program 610, the default use candidate object detection program is executed to display the screen 140 as the initial screen. In response to selection of an instruction area included in the use program specifying screen 130, a use candidate object detection program corresponding to the selected instruction area may be executed to display the screen 140.

The screen 140 may include no instruction area 145. In this case, in response to selection of an instruction area included in the use program specifying screen 130, a use candidate object detection program corresponding to the selected instruction area may be executed to display the screen 140.

The user can perform an input instructing a predetermined process associated with the work environment image 121B included in the screen 140 to perform the source input specifying the source area, the destination input specifying the destination area, and the target object category input specifying the operation target object category. Examples of the predetermined process include a process of selecting the mask image included in the work environment image 121B, moving the selected mask image from the candidate target area image of the candidate target area as the source area to the candidate target area image of the candidate target area as the destination area, and deselecting the mask image. An operation example of the information processing device 6 in this case will be described below. In the example described below, the user performs a drag-and-drop operation with the mouse included in the inputter 62 to perform the source input, the destination input, and the target object category input. However, the source input, the destination input, and the target object category input are not limited to the example described below.

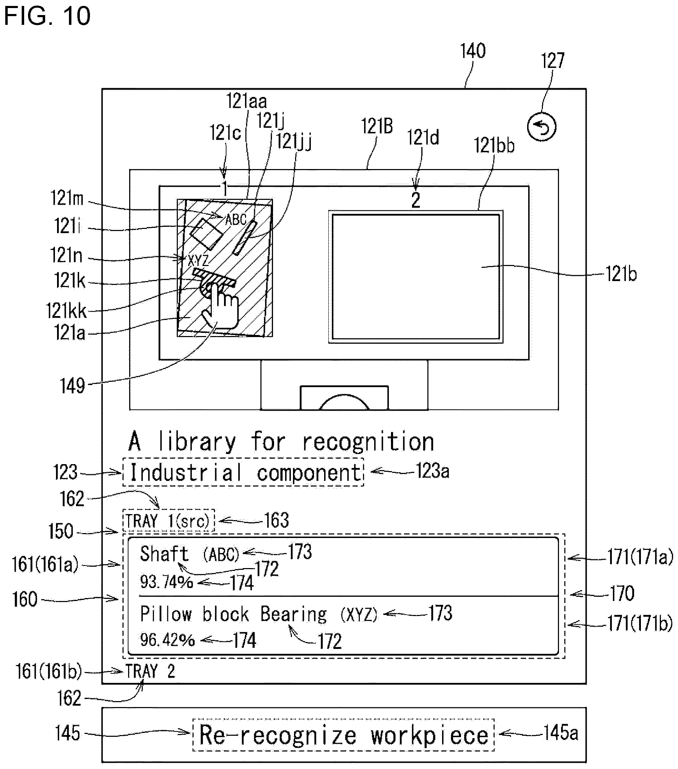

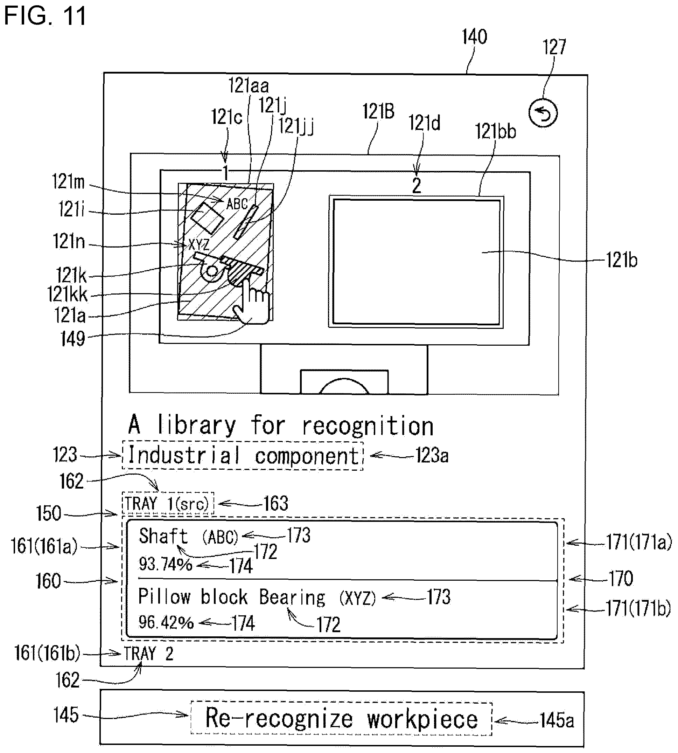

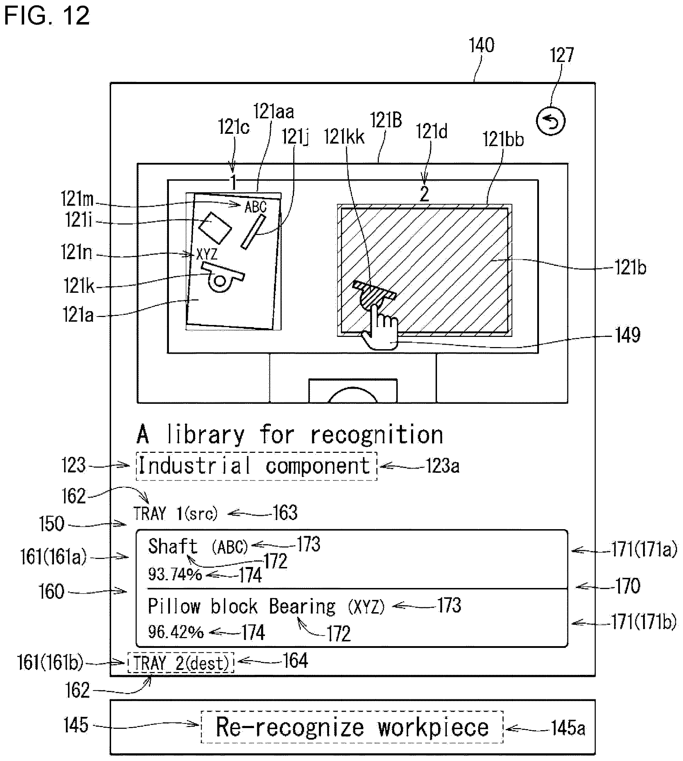

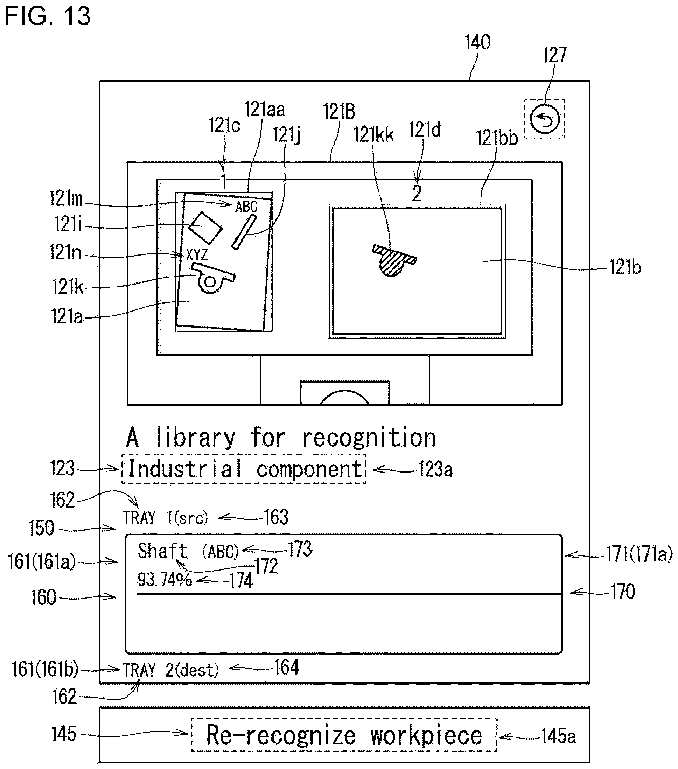

FIG. 10 is a schematic diagram illustrating an example of the mask image being selected. FIG. 11 is a schematic diagram illustrating an example of the selected mask image being slightly moved. FIG. 12 is a schematic diagram illustrating an example of the selected mask image being moved from the candidate target area image of the candidate target area as the source area to the candidate target area image of the candidate target area as the destination area. FIG. 13 is a schematic diagram illustrating an example of the mask image being deselected.

With the display 63 displaying the screen 140, the user performs, on the inputter 62, a selection instruction instructing selection of the mask image (also referred to as a target mask image) on the candidate object image of the candidate object to be set as the operation target object. This selection instruction input serves as, for example, the destination input and the target object category input. The selection instruction input is performed by, for example, a mouse operation of clicking a left button of the mouse included in the inputter 62 with a pointer located on the target mask image.

When the inputter 62 receives a selection instruction input, the controller 60 selects the target mask image. The controller 60 determines, as the operation target object category, the category of the candidate object included in the candidate object image under the target mask image. The controller 60 also determines, as the source area, the candidate target area including the candidate object included in the candidate object image under the target mask image.

The mask image hereafter corresponds to the candidate object image located under the mask image before the mask image is moved. The mask image also corresponds to the candidate object included in the candidate object image located under the mask image before the mask image is moved. The candidate target area image of the candidate target area determined as the source area may be referred to as a source area image.

In the example in FIG. 10, the user performs, on the inputter 62, a selection instruction input instructing selection of the mask image 121kk. In other words, the user keeps pushing the left button of the mouse with a pointer 149 located on the mask image 121kk as the target mask image. When the inputter 62 receives a selection instruction input instructing selection of the mask image 121kk, the controller 60 selects the mask image 121kk and determines the category of the pillow block bearing corresponding to the selected mask image 121kk as the operation target object category. The controller 60 also determines, as the source area, the candidate target area 10 as "Tray 1" including the pillow block bearing corresponding to the mask image 121kk.

The user performing the selection instruction input (e.g., pushing the left button of the mouse) performs, on the inputter 62, a movement instruction input instructing movement of the selected target mask image from a candidate target area image (also referred to as a source candidate target area image) of the candidate target area 10 determined as the source area to a candidate target area image (also referred to as a destination candidate target area image) of the candidate target area 10 to be set as the destination area. This movement instruction input serves as, for example, the destination input. The movement instruction input is performed through, for example, a mouse operation of moving the entire mouse to move the pointer on the selected target mask image from the source candidate target area image (in other words, the source area image) to the destination candidate target area image. The mouse operation of moving the entire mouse with the left button of the mouse being pushed is referred to as a drag operation.

When the inputter 62 receives a movement instruction input during the selection instruction input, the controller 60 controls the screen 140 of the display 63 to display the selected target mask image moving from the source area image to the destination candidate target area image. The controller 60 determines, as the destination area, the candidate target area included in the destination candidate target area image.

In the examples in FIGs. 11 and 12, the selected mask image 121kk moves from the source candidate target area image 121a to the destination candidate target area image 121b. When the inputter 62 receives a movement instruction input instructing movement of the selected mask image 121kk from the candidate target area image 121a to the candidate target area image 121b during the selection instruction input instructing selection of the mask image 121kk, the controller 60 determines, as the destination area, the candidate target area 10 in the candidate target area image 121b. The candidate target area image of the candidate target area 10 determined as the destination area may be hereafter referred to as a destination area image.

As illustrated in FIGs. 10 and 11, while the target mask image is being selected on the source area image (in other words, while the left button of the mouse is being pushed), the display 63 performs a first display change on the screen 140 to allow the user to easily identify the selected mask image and information about the candidate target area determined as the source area on the screen 140.

The first display change causes, for example, a mask image corresponding to a candidate object in a category different from the category of the candidate object corresponding to the selected mask image (a different category mask image) to be displayed in a color different from the color of the selected mask image. When the work environment image 121B includes a mask image corresponding to a candidate object in the same category as a candidate object corresponding to the selected mask image (also referred to as a same category mask image), the selected mask image and the same category mask image are displayed in the same color.

The first display change emphasizes an area inside the frame line surrounding the source area image (also referred to as an inner area of the frame line corresponding to the source area) to allow the target object images on the source area image, the mask image, and the pointer to be visible. For example, the inner area of the frame line corresponding to the source area is highlighted in a translucent color (e.g., translucent yellow). In this case, the inner area of the frame line corresponding to the source area is highlighted in a translucent color except the selected mask image, the same category mask image on the source area image, and the pointer on the source area image. In this manner, the selected mask image is displayed in the same color as the category mask image on the source area image and is displayed in a color different from the color of the different category mask image on the source area image.

In the examples in FIGs. 10 and 11, the area inside the frame line 121aa surrounding the candidate target area image 121a as "Tray 1" is highlighted. In FIGs. 10 and 11, the highlighted area inside the frame line 121aa is hatched. When the area inside the frame line 121aa is highlighted in translucent yellow except the selected mask image 121kk and the pointer 149, for example, the selected mask image 121kk is displayed in, for example, red, and the different category mask image 121jj is displayed in, for example, orange (a mixed color of red and yellow).

The first display change causes the frame line surrounding the source area image to be displayed in a color different from the color of the frame line surrounding a candidate target area image of a candidate target area other than the candidate target area set as the source area. In the examples in FIGs. 10 and 11, the frame line 121aa surrounding the candidate target area image 121a as "Tray 1" set as the source area is displayed in, for example, yellow, and the frame line 121bb surrounding the candidate target area image 121b as "Tray 2" is displayed in, for example, orange.

The first display change also causes the name identification information about the candidate target area 10 set as the source area to be displayed in a color different from the color of the name identification information about other candidate target areas 10. In the examples in FIGs. 10 and 11, the name identification information 121c about "Tray 1" set as the source area is displayed in, for example, yellow, and the name identification information 121d about "Tray 2" is displayed in, for example, orange.

The first display change causes the candidate target area information 161 about the candidate target area 10 set as the source area (also referred to as the candidate target area information 161 corresponding to the source area) included in the candidate target area list information 160 to be emphasized by, for example, being highlighted. In the examples in FIGs. 10 and 11, the candidate target area information 161a about "Tray 1" is emphasized. The first display change adds, to the candidate target area information 161 about the candidate target area 10 set as the source area, information 163 indicating that the candidate target area 10 is the source area. The information 163 is displayed, for example, adjacent to the name 162 of the candidate target area 10. In the examples in FIGs. 10 and 11, a character string "(src)" that is an abbreviation for source is displayed as the information 163 on the right of the name 162 included in the candidate target area information 161a. The name 162 and the information 163 included in the candidate target area information 161 corresponding to the source area are emphasized by, for example, being highlighted in yellow. The candidate object list information 170 included in the candidate target area information 161 corresponding to the source area is also emphasized. For example, the candidate object list information 170 included in the candidate target area information 161 corresponding to the source area is highlighted with the area around the name 172, the model number 173, and the certainty factor 174 being displayed in, for example, yellow.

The display 63 displaying the screen 140 after the first display change cancels the first display change on the screen 140 when the selected target mask image moves out of the source area image. In other words, the display 63 displays the screen 140 after the first display change simply when the selected target mask image is located on the source area image.

As illustrated in FIG. 12, when the selected target mask image is located on the destination area image, the display 63 performs a second display change on the screen 140 to allow the user to identify the selected mask image and information about the candidate target area determined as the destination area more easily on the screen 140. The display 63 displaying the screen 140 after the second display change cancels the second display change on the screen 140 when the selected target mask image moves out of the destination area image. In other words, the display 63 displays the screen 140 after the second display change simply when the selected target mask image is located on the destination area image.

The second display change causes, for example, the selected mask image to be displayed in a color different from the color of a different category mask image in the same manner as or in a similar manner to the first display change. When the work environment image 121B includes the same category mask image, the selected mask image and the same category mask image are displayed in the same color.

The second display change emphasizes an area inside the frame line surrounding the destination area image (also referred to as an inner area of the frame line corresponding to the destination area) to allow the target object images on the destination area image, the mask image, and the pointer to be visible. For example, the inner area of the frame line corresponding to the destination area is highlighted in a translucent color (e.g., translucent yellow). In this case, the inner area of the frame line corresponding to the source area is highlighted in a translucent color except the selected mask image, the same category mask image on the destination area image, and the pointer on the destination area image.

In the example in FIG. 12, an area inside the frame line 121bb surrounding the candidate target area image 121b as "Tray 2" set as the destination area is highlighted. In FIG. 12, the highlighted area inside the frame line 121bb is hatched. For example, when the area inside the frame line 121bb is highlighted in translucent yellow except the selected mask image 121kk and the pointer 149, the selected mask image 121kk is displayed in red.

The second display change causes the frame line surrounding the destination area image to be displayed in a color different from the color of the frame line surrounding the candidate target area image of a candidate target area other than the candidate target area set as the destination area. In the example in FIG. 12, the frame line 121bb surrounding the candidate target area image 121b as "Tray 2" set as the destination area is displayed in, for example, yellow, and the frame line 121aa surrounding the candidate target area image 121a as "Tray 1" is displayed in, for example, orange.

In the second display change, the name identification information about the candidate target area 10 set as the destination area is displayed in a color different from the color of the name identification information about other candidate target areas 10. In the example in FIG. 12, the name identification information 121d about "Tray 2" set as the destination area is displayed in, for example, yellow, and the name identification information 121c about "Tray 1" is displayed in, for example, orange.

The second display change causes the candidate target area information 161 about the candidate target area 10 set as the destination area (also referred to as the candidate target area information 161 corresponding to the destination area) included in the candidate target area list information 160 to be emphasized by, for example, being highlighted. In the example in FIG. 12, the candidate target area information 161b about "Tray 2" is emphasized. The second display change adds information 164 indicating that the candidate target area 10 is the destination area to the candidate target area information 161 about the candidate target area 10 set as the destination area. The information 164 may be displayed, for example, adjacent to the name 162 of the candidate target area 10. In the example in FIG. 12, a character string "(dest)" that is an abbreviation for "destination" is displayed as the information 164 on the right of the name 162 included in the candidate target area information 161b. The name 162 and the information 164 included in the candidate target area information 161 corresponding to the destination area are emphasized by, for example, being highlighted in yellow. When the candidate target area information 161 corresponding to the destination area includes the candidate object list information 170, the candidate object list information 170 is highlighted. For example, the candidate object list information 170 included in the candidate target area information 161 corresponding to the destination area is highlighted with the area around the name 172, the model number 173, and the certainty factor 174 being displayed in, for example, yellow.

As illustrated in FIGs. 10 and 11, when the inputter 62 receives a deselection instruction input instructing deselection of the target mask image while the display 63 is performing the first display change on the screen 140, the display 63 cancels the first display change on the screen 140. As illustrated in FIG. 12, the display 63 performing the second display change on the screen 140 cancels the second display change on the screen 140 when the inputter 62 receives a deselection instruction input instructing deselection of the target mask image. The display 63 then performs a third display change on the screen 140. The deselection instruction input is, for example, a mouse operation of releasing the pushed left button of the mouse. The mouse operation of releasing the pushed left mouse button subsequent to the drag operation is referred to as a drop operation.

The third display change eliminates the candidate object information 171 about the candidate object corresponding to the deselected target mask image from the candidate object list information 170 included in the candidate target area information 161 about the candidate target area determined as the source area. In other words, the candidate object information 171 about the candidate object in the same category as the determined operation target object category is eliminated from the candidate object list information 170 included in the candidate target area information 161 about the candidate target area determined as the source area. The eliminated candidate object information 171 is then included in the candidate target area information 161 about the candidate target area determined as the destination area.

In the example in FIG. 13, the candidate object information 171b about the candidate object in the same category as the determined operation target object category, or in other words, about the pillow block bearing, is eliminated from the candidate object list information 170 included in the candidate target area information 161a about the candidate target area as "Tray 1" determined as the source area. The eliminated candidate object information 171b is then included in the candidate target area information 161b about the candidate target area as "Tray 2" determined as the destination area. In the example in FIG. 13, the list information 150 is scrolled to display the candidate target area information 161b including the candidate object information 171b. The source input, the destination input, and the target object category input may be hereafter referred to as specific inputs unless they are to be distinguished from one another.

When the inputter 62 receives a confirmation instruction input instructing confirmation of the source input, the destination input, and the target object category input with the screen 140 illustrated in FIG. 13 being displayed, or in other words, with the screen 140 after the third display change being displayed, the controller 60 confirms the source input, the destination input, and the target object category input from the user and confirms the determination of the destination area, the source area, and the operation target object category. The confirmation instruction input may be, for example, an input selecting an instruction area to be displayed by the display 63 with the screen 140 after the third display change.

In contrast, when the inputter 62 receives a deselection instruction operation with the selected target mask image not located on the destination candidate target area image, the controller 60 disables the specific inputs received previously and cancels the determination of, for example, the destination area. As illustrated in FIGs. 10 and 11, for example, when the inputter 62 receives a deselection instruction input with the selected mask image 121kk located on the source candidate target area image 121a, the controller 60 disables the specific inputs received previously, such as the source input, and cancels the determination of, for example, the destination area. When the inputter 62 receives a deselection instruction input with the selected mask image 121kk located between the source candidate target area image 121a and the destination candidate target area image 121b, the controller 60 disables the specific inputs received previously, such as the source input, and cancels the determination of, for example, the destination area.

When the controller 60 disables the specific inputs received previously, the display 63 redisplays the screen 140 before the selection of the mask image as illustrated in FIG. 8. The user provides the specific inputs on the inputter 62 again.

The screen 140 after the third display change includes an active instruction area 27. As illustrated in FIG. 13, the active instruction area 27 is emphasized by, for example, being highlighted in a noticeable color (e.g., blue). When the inputter 62 receives an input selecting the instruction area 27, the controller 60 initializes the operation based on the GUI program 610 in the information processing device 6 and causes the display 63 to display the initial screen (e.g., the screen 110 in FIG. 6). The information processing device 6 then operates as described above.

The operations on the mask image using, for example, the mouse as described above may be operations on the candidate object. The above operation of moving the mask image to the candidate target area image may be an operation of dragging the candidate object to the candidate target area. The above operation of deselecting the mask image and putting the mask image on the candidate target area image may be an operation of dropping the candidate object within the candidate target area.

In the information processing device 6, the inputter 62 receives a holding method input and the placement method input after the controller 60 confirms determination of the destination area, the source area, and the operation target object category. The controller 60 then generates the action information. The action information includes, for example, source identification information for identifying an area of the source, destination identification information for identifying an area of the destination, and the operation target object category. The action information also includes holding method identification information for identifying the holding method of the operation target object specified by the holding method input and placement method identification information for identifying the placement method of the operation target object specified by the placement method input.

The source identification information may be information for identifying the position and the boundary of the source area image on the work environment image 121. The information may be coordinate information about the four corners of the source area image. The source identification information may also be information that allows identification of a rough position of the source area image in the work environment image 121. When the source area image is the candidate target area image 121a, for example, the source identification information is positional information indicating that the source area image is located leftward in the work environment image 121.

In the same manner as or in a similar manner to the source identification information, the destination identification information may be information for identifying the position and the boundary of the destination area image on the work environment image 121. The information may be coordinate information about the four corners of the destination area image. The destination identification information may also be information that allows identification of a rough position of the destination area image in the work environment image 121. When the destination area image is the candidate target area image 121b, for example, the destination identification information may be positional information indicating that the destination area image is located rightward in the work environment image 121.

The controller 60 generates job information including at least one piece of the action information. For example, the work environment 100 includes a first tray, a second tray, and a third tray as the candidate target areas 10, and the robot 2 is to transfer the operation target object from the first tray to the second tray and then from the second tray to the third tray. In this case, a piece of action information indicating the first tray as the source area and the second tray as the destination area is generated as describe above. Another piece of action information indicating the second tray as the source area and the third tray as the destination area is generated as described above. The controller 60 generates job information including the generated two pieces of action information.

When the inputter 62 receives, after the controller 60 generates the job information, a robot input specifying the robot 2 that performs the operation identified by the generated job information and a condition input specifying the start condition and the termination condition of the operation, the controller 60 generates the task information. The task information includes the job information, robot identification information for identifying the robot 2 specified by the robot input, and the start condition and the termination condition specified by the condition input.

The controller 60 transmits the generated task information to the system control device 4 through the interface 52. The system control device 4 stores the received task information into the storage 41 and allows the task information to persist. The system control device 4 provides an identifier for the persistent task information to the controller 5.

Upon receiving the identifier for the task information from the system control device 4, the controller 5 inquires the details of the task information from the system control device 4. The system control device 4 reads the inquired task information from the storage 41 and transmits the task information to the controller 5. The controller 5 controls the robot 2 based on the task information from the system control device 4. In this manner, the robot 2 determines the object in the category specified by the user as the operation target object and transfers the operation target object from the source area specified by the user to the destination area specified by the user.

When the controller 5 controls the robot 2 based on the task information, the controller 50 executes the program 510 for detecting the objects in the same category as the operation target object category included in the task information. This detects the operation target objects in the work environment 100. The controller 50 executes a program, or in other words, the candidate target area detection program 510, for detecting the trays serving as the area of the destination and the area of the source. This detects multiple trays in the work environment 100. The controller 50 identifies the source tray and the destination tray from the detected multiple trays based on the source identification information and the destination identification information included in the task information. The controller 5 controls the robot 2 to transfer the detected operation target object from the source tray to the destination tray.

As described above, in the information processing device 6, when the display 63 displays the first detection result of detecting at least one candidate target area 10 including the candidate for the destination area in the work environment 100 and the second detection result of detecting at least one candidate object including the candidate for the operation target object in the work environment 100, the inputter 62 receives a destination input specifying the destination area from the first detection result (or in other words, from at least one candidate target area 10). The user can thus perform the destination input while viewing the first detection result and the second detection result displayed by the display 63. Thus, the destination input is performed more easily. This improves the user convenience of the information processing device 6.

In the information processing device 6, when the display 63 displays the first detection result of detecting at least one candidate target area 10 including the candidate for the source area in the work environment 100 and the second detection result of detecting at least one candidate object including the candidate for the operation target object in the work environment 100, the inputter 62 receives a source input specifying the source area from the first detection result (or in other words, from at least one candidate target area 10). The user can thus perform the source input while viewing the first detection result and the second detection result displayed by the display 63. Thus, the source input is performed more easily. This improves the user convenience of the information processing device 6.

In the information processing device 6, when the display 63 displays the first detection result of detecting at least one candidate target area 10 including the candidate for the source area in the work environment 100 and the second detection result of detecting at least one candidate object including the candidate for the operation target object in the work environment 100, the inputter 62 receives a target object input specifying the operation target object from the second detection result (or in other words, from at least one candidate object). The user can thus perform the target object input while viewing the first detection result and the second detection result displayed by the display 63. Thus, the target object input is performed more easily. This improves the user convenience of the information processing device 6.

The target object input may be input through at least one of the destination input or the source input. In the present embodiment, the destination input may be input through an operation on the candidate object detected as the second detection result. The source input may also be input through an operation on the candidate object detected as the second detection result. More specifically, in the destination input, for example, the candidate object may be dragged to an intended candidate target area and dropped within the intended candidate target area. This may specify the dropped candidate object as the destination area. In the source input, for example, the candidate object may be dragged to an intended candidate target area and dropped within the intended candidate target area. This may specify the candidate target area on which the candidate object is originally located as the source area. In the target object input, for example, the candidate object may be dragged to an intended candidate target area and dropped within the intended candidate target area. This may specify the candidate object undergoing the operation as the operation target object. In other words, in the present embodiment, the destination input and the source input are performed through an operation on the candidate object. In another aspect, the destination input also serves as the source input or the target object input. Thus, the source input or the target object input may be performed through the destination input.

The inputter 62 receives a program input specifying the use candidate object detection program from the multiple different candidate object detection programs for detecting multiple different candidate objects from the work environment 100. Thus, the user can specify the use candidate object detection program. This improves the user convenience of the information processing device 6. Note that the user may not be allowed to specify the use candidate object detection program. Note that, with the multiple different candidate object detection programs, the controller 60 may estimate, for example, the multiple candidates for the candidate object detection program based on the work environment and cause the display 63 to display the candidates. In this case, the candidates for the multiple target object detection programs to be displayed are changed depending on the work environment.

When a target object category input specifying the category of the operation target object is received, the candidate objects in the category specified by the target object category input may be specified as the operation target objects. In this case, the user may not select each of the multiple candidate objects, which improves the user convenience of the information processing device 6. Note that the target object category input may be determined as being received when the target object input specifying the operation target object is received, based on the category of the operation target object being specified.

When the target object input specifying the operation target object is received, other candidate objects with the candidate object information of the operation target object may be the operation target objects. This also improves the user convenience of the information processing device 6.

When the multiple candidate objects in a specific category or with specific candidate object information are specified as the operation target objects as described above, the candidate objects specified as the operation target objects may be limited to the candidate objects located in the source area. In this case, for example, the drag-and-drop operation on the candidate object completes specifying the source area. The candidate objects located in the source area are then specified as the operation target objects.

Note that, for the robot control system 3 storing multiple different candidate target area detection programs, the robot control system 3 may allow the user to specify a candidate target area detection program to be used (also referred to as a use candidate target area detection program). In this case, in response to selection of the instruction area 111 on the screen 110 illustrated in FIG. 5, for example, the display 63 displays the work environment image 121 and a second use program specifying screen for specifying the use candidate target area detection program from the multiple different candidate target area detection programs. The second use program specifying screen has the same structure as or a similar structure to the use program specifying screen 130 illustrated in FIG. 7 and includes multiple specifying areas corresponding to the respective multiple different candidate target area detection programs. When the inputter 62 receives an input selecting a specifying area included in the second use program specifying screen, the controller 60 determines a candidate target area detection program corresponding to the selected specifying area as the use candidate target area detection program. The input selecting a specifying area included in the second use program specifying screen is the program input specifying a use candidate target area detection program from the multiple different candidate target area detection programs. When the use candidate target area detection program specified by the user is executed, the candidate target area images of the candidate target areas in the work environment image 121 are identified and the work environment image 121 is changed as in, for example, FIG. 6. Note that, with the multiple different candidate target area detection programs, the controller 60 may estimate, for example, multiple candidates for the candidate target area detection program based on the work environment and may cause the display 63 to display the candidates. In this case, the candidates for the multiple candidate target area detection program to be displayed are changed depending on the work environment. The use candidate target area detection program may be executed by the controller 5, the system control device 4, or the information processing device 6, in the same manner as or in a similar manner to the use candidate object detection program.

In the above example, the inputs instructing the predetermined processes associated with the work environment image 121B are the source input, the destination input, and the target object category input. Additionally or alternatively, the inputs instructing a predetermined process associated with the list information 150 may be the source input, the destination input, and the target object category input. The predetermined process is, for example, a process of selecting the candidate object information 171 included in the list information 150, moving the selected candidate object information 171 from the candidate target area information 161 about the candidate target area as the source area to the candidate target area information 161 about the candidate target area as the destination area, and deselecting the candidate object information 171. In this case, for example, the selection instruction input instructing selection of the candidate object information 171 about the candidate object set as the operation target object serves as the source input and the destination input. When the inputter 62 receives a selection instruction input, the controller 60 determines the category of the candidate object corresponding to the selected candidate object information 171 as the operation target object category. The controller 60 determines, as the source area, the candidate target area corresponding to the candidate target area information 161 including the selected candidate object information 171.

The user performing the selection instruction input performs, as the destination input on the inputter 62, a movement instruction input that instructs movement of the selected candidate object information 171 from the candidate target area information 161 (also referred to as the source candidate target area information 161) about the candidate target area 10 determined as the source area to the candidate target area information 161 (also referred to as the destination candidate target area information 161) about the candidate target area 10 set as the destination area. When the inputter 62 receives a movement instruction input during the selection instruction input, the controller 60 controls the screen 140 of the display 63 to display the selected candidate object information 171 moving from the source candidate target area information 161 to the destination candidate target area information. The controller 60 determines the candidate target area corresponding to the destination candidate target area information as the destination area. For example, when the candidate object information 171b is selected and moved from the candidate target area information 161a to the candidate target area information 161b, the screen 140 displays as in, for example, FIG. 13.

In this manner, when the inputs instructing the predetermined process associated with the work environment image 121B are the source input, the destination input, and the target object category input, the user can easily perform the source input, the destination input, and the target object category input.

Although the robot system, the robot control system, the system control device, the robot controller, and the information processing device have been described in detail, the above structures are illustrative in all respects, and the disclosure is not limited to the above structures. All the features of the embodiments described above may be combined in use unless any contradiction arises. Many variations not specifically described above may be implemented without departing from the scope of the disclosure.

For example, although the destination input or the source input are achieved through an operation on the candidate object in the example describe above, the destination input or the source input may be selected directly. In this case, the selection instruction input may be performed through, for example, a click operation on the candidate target area 10 to be set as the destination area to be the destination with, for example, the inputter 62, or specifically, the mouse.

For example, although the destination input and the target object input are performed through a drag-and-drop operation on the candidate object in the example described above, these inputs may not be limited to the drag-and-drop operation. For example, receiving the selection instruction input specifying the destination area being the destination after receiving the selection instruction input specifying a candidate object as the operation target object may specify the destination area and the operation target object.

For example, although the source input and the target object input are performed through a drag-and-drop operation on the candidate object in the example described above, these inputs may not be limited to the drag-and-drop operation. For example, receiving the selection instruction input specifying the candidate object as the operation target object after receiving the selection instruction input specifying the source area being the source may complete specifying the source area and the operation target.

Although the multiple candidate objects are detected from the work environment 100 based on the work environment image 121A in the example described above, the multiple candidate objects may be detected from an area smaller than the area for the work environment image 121A. For example, with the multiple candidate objects, the inputter 62 may receive an input specifying the detection area, and the multiple candidate objects located in the detection area may be subjected to detection. Note that the detection area is, for example, the candidate target area, and the candidate target area specified as the detection area may be determined as the source area. In other words, when the inputter 62 receives a selection instruction input specifying the source area being the source, the multiple candidate objects located in the source area may be subjected to detection.

The mouse is used to, for example, perform an input on the inputter 62 in the example described above. For the inputter 62 implemented by a touchscreen display, for example, the user may use a finger or another part to perform an input on the inputter 62.

The candidate object detection programs are, for example, programs that can detect, for example, industrial components, stationery items, and springs in the example above. This is not limitative. The candidate object detection programs may detect, for example, fruits or vegetables.

### REFERENCE SIGNS

2 robot
6 information processing device
62 inputter
63 display
121, 121A, 121B work environment image
150 list information
410, 510, 610 program

## Claims

1. An information processing device for obtaining information to control a robot to perform an operation of transferring an operation target object in a source area to a destination area, the information processing device comprising:
a display; and
an inputter configured to receive a user input,
wherein when the display displays a first detection result of detecting at least one candidate target area including a candidate for the destination area and a second detection result of detecting at least one candidate object including a candidate for the operation target object in a work environment of the robot, the inputter is configured to receive a destination input specifying the destination area from the at least one candidate target area.

2. The information processing device according to claim 1, wherein
the destination input is input through an operation on a candidate object included in the at least one candidate object.

3. The information processing device according to claim 2, wherein
the destination input is input through an operation of dragging the candidate object to a candidate target area included in the at least one candidate target area and dropping the candidate object in the candidate target area.

4. The information processing device according to any one of claims 1 to 3, wherein
the at least one candidate target area includes a candidate for the source area, and
the inputter is configured to receive a source input specifying the source area from the at least one candidate target area.

5. The information processing device according to claim 4, wherein
the source input is input through an operation on a candidate object included in the at least one candidate object.

6. The information processing device according to claim 4 or claim 5, wherein
the display is configured to display, when the inputter receives the source input, a target object in the specified source area as the second detection result.

7. The information processing device according to any one of claims 1 to 6, wherein
the inputter is configured to receive a target object input specifying the operation target object from the at least one candidate object, and
the target object input is input through at least one of the destination input or the source input.

8. The information processing device according to claim 7, wherein
the second detection result includes a category result indicating a category of the candidate for the operation target object.

9. The information processing device according to claim 8, wherein
the inputter is configured to receive a target object category input specifying the category of the operation target object as the target object input, and
a candidate object being the at least one candidate object and being in the category specified by the target object category input is specified as the operation target object.

10. The information processing device according to claim 9, wherein
a candidate object being the at least one candidate object, being in the category specified by the target object category input, and being in the source area is specified as the operation target object.

11. The information processing device according to any one of claims 1 to 10, wherein
the inputter is configured to receive a first program input specifying a first program to be used from a plurality of different first programs for detecting a plurality of different candidate target areas.

12. The information processing device according to claim 11, wherein
the display is configured to display a candidate for at least one first program usable among the plurality of different first programs.

13. The information processing device according to claim 12, wherein
the candidate for the at least one first program is changed based on the work environment.

14. The information processing device according to any one of claims 1 to 13, wherein
the inputter is configured to receive a second program input specifying a second program to be used from a plurality of different second programs for detecting a plurality of different candidate objects.

15. The information processing device according to claim 14, wherein
the display is configured to display a candidate for at least one second program usable among the plurality of different second programs.

16. The information processing device according to claim 15, wherein
the candidate for the at least one second program is changed based on the work environment.

17. The information processing device according to any one of claims 1 to 16, wherein
the display is configured to display a work environment image of the work environment, and
the work environment image includes at least part of the first detection result and the second detection result.

18. The information processing device according to any one of claims 1 to 16, wherein
the display is configured to display, as the first detection result and the second detection result, list information listing the at least one candidate target area and the at least one candidate object.

19. The information processing device according to any one of claims 1 to 18, further comprising:
a touchscreen display including the display and the inputter.

20. A controller connectable to the display and the inputter included in the information processing device according to any one of claims 1 to 19 to communicate with the display and the inputter, the controller being configured to process information to control a robot configured to transfer an operation target object in a source area to a destination area.
